Europäisches Patentamt

European Patent Office

Office européen des brevets

(11) Publication number: 0 196 828
A2

# EUROPEAN PATENT APPLICATION

(21) Application number: 86302041.8

(22) Date of filing: 19.03.86

(51) Int. Cl.⁴: **C09J 3/14** , C08L 25/14 , C08L 51/04 , C08L 9/06

(30) Priority: 23.03.85 GB 8507597

(43) Date of publication of application:
08.10.86 Bulletin 86/41

(84) Designated Contracting States:
AT BE CH DE FR GB IT LI NL SE

(71) Applicant: DUNLOP LIMITED
Silvertown House Vincent Square
London SW1P 2PL(GB)

(72) Inventor: Kennedy, James Aloysius
23 Kingsbury Road Curdworth
Sutton Coldfield West Midlands(GB)
Inventor: Whittle, Ian
9 Firs Farm Drive
Castle Bromwich Birmingham B36 8PA(GB)

(74) Representative: Moore, John Hamilton
Dunlop Limited Group Patent Department P.O. Box
504
Erdington Birmingham B24 9QH(GB)

(54) Adhesive composition.

(57) Adhesive composition comprising in aqueous medium, a carboxylated styrene-butadiene elastomer having a styrene content of at least 30 mol %, another elastomer suitable for use in an aqueous-based adhesive composition, and a tackifying resin, said carboxylated styrene-butadiene elastomer being present in an amount of at least 10 parts by dry weight per 100 parts by dry weight of total elastomers, said tackifying resin being present in an amount of up to 30 parts by dry weight per 100 parts by dry weight of total elastomers, and said composition having a total solids content of at least 40% by weight and being substantially free of organic liquid media. The composition is suitable for bonding a wide variety of materials, especially metals.

EP 0 196 828 A2

## ADHESIVE COMPOSITION

This invention relates to adhesive compositions, particularly to contact adhesive compositions.

An object of the present invention is to provide an adhesive composition which is substantially free of organic solvents/dispersants and which is capable of producing a strong bond between a wide variety of materials.

According to the present invention there is provided an adhesive composition comprising, in an aqueous medium, a carboxylated styrene-butadiene elastomer having a styrene unit content of at least 30 mol per cent, another elastomer suitable for use in an aqueous-based adhesive composition, and a tackifying resin, said carboxylated styrene-butadiene elastomer being present in an amount of at least 10 parts by dry weight per 100 parts by dry weight of total elastomers, said tackifying resin being present in an amount of up to 30 parts by dry weight per 100 parts by dry weight of total elastomers, and said composition having a total solids content of at least 40 per cent by weight and being substantially free of organic liquid media.

The carboxylated styrene-butadiene elastomer suitably should not be normally tacky in the dry state and suitably should not be so hard as to film-form in the absence of heating. Thus, normally it will have a content of styrene units of less than 90 mol per cent and a preferred styrene unit content is from 30 to 80 mol per cent. Examples of suitable carboxylated styrene-butadiene elastomers are those available under the trade names "Intex", "Dow", "Bayer" and "Revinex" having styrene unit contents in the above range.

The other elastomer required for the composition may be a polymer which is known to be suitable for use as the elastomer base in aqueous adhesive compositions. Examples of such elastomers are chloroprene elastomers, natural rubber and prevulcanised natural rubber. A preferred other elastomer is a carboxylated chloroprene elastomer. Vinyl pyridine copolymers are not suitable for use in the composition and preferably such copolymers are absent from the composition.

The total amount of elastomers in the composition may be for example about 80 to 90 per cent by dry weight of the total composition. The proportions of carboxylated styrene-butadiene elastomer and the other elastomer in the composition preferably should be such as to result in a composition having both good coalescence and good adhesion to metals. The optimum ratio of proportions will depend on the particular elastomers employed. For a composition in which the other elastomer is a chloroprene elastomer - (especially a carboxylated chloroprene elastomer), a suitable dry weight ratio of carboxylated styrene-butadiene elastomer to chloroprene elastomer may be in the range of about 1:9 to below 1:1, preferably about 3:7. It is found that proportions of carboxylated styrene-butadiene elastomer of less than about 10 parts by dry weight per 100 parts by dry weight of total elastomer result in a relatively low bond strength to metals and that proportions of carboxylated styrene-butadiene elastomer of more than about 49, especially more than about 30, parts by dry weight per 100 parts by dry weight of total elastomer result in a relatively poor coalescence.

The resin employed in the composition must be a tackifying resin and preferably is one which confers heat-resistance and which allows a long open-joint time. Tackifying resins are resins which promote contactability of a touch-dry film of a polymer-based adhesive composition, i.e. they promote the property of coalescence at low pressure. Preferred tackifying resins are rosin, rosin derivatives - (especially rosin esters), which may be polymer-modified, and phenolic resins. The tackifying resin should be substantially free of organic solvent/dispersant and suitably is employed as an aqueous emulsion or dispersion. Examples of aqueous-based phenolic resins are those available under the trade names "Union Carbide BKUA 2370", "Schenectady SMD 3405" and "Ferguson & Menzies 1901". Examples of suitable rosin esters are those available under the trade names "Snowhite" and "Ferquatac". A typical range of amounts of the tackifying resin is from 10 to 30 parts by dry weight per 100 parts by dry weight of the total elastomers present.

If desired, the composition may contain more than one carboxylated styrene-butadiene elastomer and/or other elastomer and/or tackifying resin.

The composition may contain additionally other ingredients which are conventional in adhesive compositions, for instance ingredients selected from fillers, thickeners, and stabilisers. An example of a suitable filler is talc and an example of a suitable amount of filler is up to about 5 parts by weight weight per 100 parts by dry weight of the total elastomers. An example of a suitable thickener is a polyacrylate thickener. The amount of thickener employed depends on the desired viscosity of the composition, an example of a suitable amount being about 2 to 3 parts by dry weight per 100 parts by dry weight of the total elastomers.

The composition preferably has a high solids content, the higher the better, provided that the composition can be applied in fluid form and is suitable for the particular method of application employed and the materials to be bonded. The solids content may be, for example, from 40 to 90 per cent by weight. This is in contrast to compositions based on vinyl pyridine copolymers and resins such as resorcinol-aldehyde resins, which require a significantly lower solids content to avoid detrimental gel-formation.

The composition may be provided by conventional mixing of the ingredients to attain homogeneity. When a solvent or dispersing medium is required for any of the ingredients, this should be an aqueous-based medium. Typically the composition does not require drying or heating (unlike e.g. compositions based on vinyl pyridine copolymers which usually require drying and heating to achieve cross-linking).

The composition is particularly useful as a contact adhesive and accordingly should be applied to each of the surfaces to be bonded.

It is found that compositions in accordance with this invention usually have an exceptionally long open-joint time, for instance of more than 7 days, and produce a high bond strength between a wide range of materials, including metals. A long open-joint time is of particular advantage in commercial use of the adhesive since it enables a long delay between application of the composition and assemblage of the coated surfaces without detriment to the bond strength. It is found that compositions containing a carboxylated styrene-butadiene elastomer as the sole elastomer component have unacceptable poor coalescence when applied to surfaces to be bonded, and that compositions containing an elastomer such as a chloroprene elastomer, natural rubber or a prevulcanised natural rubber as the sole elastomer component have relatively low bond strengths to metals. Compositions in accordance with the present invention, on the other hand, usually have good coalescence and good bond strength to metals, and it is found that there is an advantageous unexpected synergistic effect produced by the combination of ingredients in the composition.

The invention is illustrated by way of example only in the following Examples:-

## Coalescence Test

The compositions were produced by mixing at room temperature (about 20°C) to attain homogeneity, the ingredients being incorporated in the order given in the above formulation from top to bottom. After mixing, unless otherwise stated below, the compositions were allowed to stand at room temperature for at least 24 hours to self-stabilise before being tested.

Coalescence Test

A composition having a solids content of about 47 w% in which the total elastomer is a carboxylated chloroprene elastomer (as a latex having a solids content of about 42 w%) was brushed onto paper sheets to give a uniform weight coating, the coatings were allowed to stand at room temperature to become touch-dry (about 10 minutes), and then the coated surfaces were hand-pressed together and the coalescence of the coatings and the immediate peelability of the sheets were examined.

This procedure was repeated for compositions in which corresponding proportions of the carboxylated chloroprene elastomer were variously replaced by 10, 30, 50, 70, 90 and 100 parts by dry weight of one of the following polymers, viz:-

(A) Low ammonia natural rubber (latex solids content = ca.60 w%).

## EXAMPLE I

Compositions were prepared from the following basic formulation;-

|  | Dry parts by weight |
|---|---|
| Elastomer (latex) | 100 |
| Rosin ester, "Snowhite 124" (aqueous dispersion) | 20 |
| Talc filler | 1 |
| Polyacrylate thickener (aqueous dispersion) | 3 |

(B) High ammonia prevulcanised natural rubber (latex solids content = ca.60 w%).

(C) Styrene-acrylic polymer (latex solids content = ca.45 w%).

(D) Acrylic polymer (latex solids content = ca.50 w%).

(E ) Carboxylated styrene-butadiene elastomer having a styrene content of less than 30% (latex solids content = ca.45 w%).

(F) Carboxylated styrene-butadiene elastomer having a styrene content of 48 mol % (latex solids content = ca.48 w%).

The results are shown in the following table, in which:

C/NP = Coalescence and Non-Peelable (the paper tears when separation is attempted)

NC = Non-coalescence

C/P = Coalescence and Peelable

## Parts of replacement polymer

|  | 0 | 10 | 30 | 50 | 70 | 90 | 100 |
|---|---|---|---|---|---|---|---|
| (A) | C/P | C/NP | C/NP | C/NP | C/NP | C/NP | C/NP |
| (B) | C/P | C/P | C/P | C/P | C/NP | C/NP | C/NP |
| (C) | C/P | C/P | NC | NC | NC | NC | NC |
| (D) | C/P | C/P | NC | NC | NC | NC | NC |
| (E) | C/P | C/P | C/P | C/P | C/P | C/P | C/P |
| (F) | C/P | C/NP | C/NP | NC | NC | NC | NC |

Bond Shear Strength Tests

Test 1

The majority of the compositions tested for coalescence as above were brush-coated to a uniform thickness onto pinewood testpieces over a width of one inch from an edge of each testpiece and the coated testpieces were allowed to stand at room temperature until the coatings were touch-dry. Pairs of testpieces having identical coatings were then assembled in stepped overlapping relationship with their coated portions in contact and the overlapped section of each assembly was subjected to three passes of a power-driven 15 kg roller. After 24 hours at room temperature the bond shear strength of each assembly was measured using an "Instron" tester operating at 1 inch per minute.

The results showed that the compositions containing up to about 45 parts by dry weight of the low ammonia natural rubber latex (A) and the compositions containing up to about 36 parts by dry weight styrene-butadiene elastomer containing more than 30% styrene (F) produced bond shear strengths superior to that of the composition containing 100 parts by dry weight of the carboxylated chloroprene elastomer, (about 1.7 MPa), whereas the other compositions produced bond shear strengths inferior to that of the said composition, the compositions containing the carboxylated styrene-butadiene elastomer with less than 30% styrene (E) producing particularly low bond shear strengths of about 1.0 MPa at 10 parts by dry weight falling to about 0.2 MPa at 100 parts by dry weight. The bond shear strength of the composition containing 10 parts by dry weight of the styrene-butadiene elastomer with more than 30% styrene (F) was about 1.9 MPa and the composition containing 30 parts by dry weight of that elastomer was about 1.7 MPa.

Test 2

The compositions containing 100 parts by dry weight of the carboxylated chloroprene elastomer, 10 and 30 parts by dry weight of the styrene-butadiene elastomer having more than 30% styrene (F) and 10 and 30 parts by dry weight of the low ammonia natural rubber latex (A), each composition containing in addition 1 part by dry weight of an antioxidant "22 CP 46", were tested further for bond shear strength by the above procedure but after being subjected to the following more severe conditions:

(L) after the assemblies had been maintained at room temperature for 7 days; (II) after the assemblies had been maintained in an oven at 60°C for 7 days followed by room temperature for 1 hour; (III) after the coated surfaces had been maintained in the uncontacted state at room temperature for 7 days and then the assemblies had been maintained at room temperature for 24 hours.

The results showed that the coalescence and heat-resistance of the compositions containing natural rubber decrease significantly with increasing natural rubber content, and that the compositions containing carboxylated styrene-butadiene elastomer of high styrene content result in good general shear strength and heat-resistance which are better than those of the composition containing 100 parts by dry weight of the carboxylated chloroprene elastomer and which increase with increasing content of the carboxylated styrene-butadiene elastomer.

Test 3

The metal/metal bond shear strength of the composition containing 30 parts by dry weight of the carboxylated styrene-butadiene elastomer with more than 30% styrene - (F) was compared to that of the composition containing 100 parts by dry weight of the carboxylated chloroprene elastomer by the aforementioned procedure wherein the testpieces are assembled immediately after the coatings have become touch-dry except that the testpieces were of stainless steel instead of wood.

The results were a bond shear strength of about 0.3 MPa for the composition containing the carboxylated styrene-butadiene elastomer, compared to a bond shear strength of about 0.8 MPa for the composition containing carboxylated chloroprene elastomer as the sole elastomer.

EXAMPLE II

| | Dry parts by weight |
|---|---|
| Carboxylated styrene-butadiene elastomer having a styrene content of 48 mol % (latex) | 30 |
| Carboxylated chloroprene elastomer (latex) | 70 |
| Phenolic resin (aqueous dispersion) | 20 |
| Talc filler | 1 |
| Polyacrylate thickener (aqueous solution) | 2.4 |

Three compositions were prepared, wherein the phenolic resin was "Union Carbide BKUA 2370", "Schenectady SMD 3405" and "Ferguson & Menzies 1901", respectively.

The total solids contents of the compositions were about 47 w%.

The compositions were produced by mixing at room temperature (about 20°C) to attain homogeneity, the ingredients being incorporated in the order given in the formulation from top to bottom.

After mixing, the compositions were allowed to stand at room temperature for at least 24 hours to self-stabilise and were then subjected to the pinewood bond shear strength test and stainless steel bond shear strength test described in Example I.

The pinewood bond shear strengths were found to be about 1.9 MPa and the stainless steel bond shear strengths were found to be about 0.6 MPa.

| Name | % Styrene |
|---|---|
| Intex 1476 | 45 |
| Intex 164 | 49 |
| Intex 1460 | 53 |
| Intex 166 | 57 |
| Intex 1493 | 63 |
| Intex 2032 | 75 |
| Dow 891 | 48 |
| Bayer 520 | 40 |
| Bayer 525 | 50 |
| Bayer 527 | 55 |
| Bayer E440 | 55 |
| Bayer T564 | 58 |
| Bayer 530 | 60 |
| Revinex 38J33 | 34 |
| Revinex 90W10 | 35 |
| Revinex 96C40 | 37 |
| Revinex 9042 | 46 |
| Revinex 5044 | 49 |
| Revinex 80J10 | 53 |
| Revinex 91742 | 56 |
| Revinex 98F10 | 58 |
| Revinex 85P10 | 65 |
| Revinex 20N40 | 78 |

The ingredients were incorporated and the compositions were produced and tested as described in Example II. The solids contents of the compositions were about 47 w%.

In all cases the pinewood and stainless steel bond shear strengths were found to be satisfactory.

**Claims**

1. An adhesive composition comprising, in an aqueous medium, a carboxylated styrene-butadiene elastomer having a styrene unit content of at least 30 mol percent, another elastomer suitable for use in an aqueous-based adhesive composition, and a tackifying resin, said carboxylated styrene-butadiene elastomer being present in an amount of at least 10 parts by dry weight per 100 parts by dry weight of total elastomers, said tackifying resin being present in an amount of up to 30 parts by dry weight per 100 parts by dry weight of total elastomers, and said composition having a total solids content of at least 40 percent by weight and being substantially free of organic liquid media.

EXAMPLE III

Twenty three compositions were prepared from the same basic formulation as that of Example II except that the carboxylated styrene-butadiene elastomer was one of the following elastomers, respectively:-

2. A composition according to claim 1 wherein the carboxylated styrene-butadiene elastomer has a styrene unit content of less than 90 mol percent.

3. A composition according to claim 1 wherein the carboxylated styrene-butadiene elastomer has a styrene unit content of from 30 to 80 mol percent.

4. A composition according to any of the preceding claims wherein the total elastomer content is from 80 to 90 percent by dry weight of the total composition.

5. A composition according to any of the preceding claims wherein the other elastomer is selected from chloroprene elastomers, natural rubber and prevulcanised natural rubber.

6. A composition according to any of claims 1 to 4 wherein the other elastomer is a carboxylated chloroprene elastomer.

7. A composition according to any of the preceding claims wherein the amount of carboxylated styrene-butadiene elastomer is up to 49 parts by dry weight per 100 parts by dry weight of total elastomers.

8. A com position according to any of the preceding claims wherein the amount of carboxylated styrene-butadiene elastomer is up to 30 parts by dry weight per 100 parts by dry weight of total elastomers.

9. A composition according to any of the preceding claims wherein the tackifying resin is selected from rosin, rosin derivatives and phenolic resins.

10. A composition according to any of the preceding claims wherein the amount of tackifying resin is from 10 to 30 parts by dry weight per 100 parts by dry weight of total elastomers.

Claims for the Contracting State: AT

1. Method of making an adhesive composition comprising mixing together in an aqueous medium which is substantially free of organic liquid media, a carboxylated styrene-butadiene elastomer having a styrene unit content of at least 30 mol percent, another elastomer suitable for use in an aqueous-based adhesive composition, and a tackifying resin, said carboxylated styrene-butadiene elastomer being incorporated in an amount of at least 10 parts by dry weight per 100 parts by dry weight of total elastomers, said tackifying resin being incorporated in an amount of up to 30 parts by dry weight per 100 parts by dry weight of total elastomers, and the amounts of the ingredients being such that the resulting composition has a total solids content of at least 40 percent by weight.

2. Method according to claim 1 wherein the carboxylated styrene-butadiene elastomer has a styrene unit content of less than 90 mol percent.

3. Method according to claim 1 wherein the carboxylated styrene-butadiene elastomer has a styrene unit content of from 30 to 80 mol percent.

4. Method according to any of the preceding claims wherein the amounts of elastomers incorporated are such as to produce a total elastomer content of from 80 to 90 percent by dry weight of the resulting total composition.

5. Method according to any of the preceding claims wherein the other elastomer is selected from chloroprene elastomers, natural rubber and prevulcanised natural rubber.

6. Method according to any of claims 1 to 4 wherein the other elastomer is a carboxylated chloroprene elastomer.

7. Method according to any of the preceding claims wherein the amount of carboxylated styrene-butadiene elastomer incorporated is up to 49 parts by dry weight per 100 parts by dry weight of total elastomers.

8. Method according to any of the preceding claims wherein the amount of carboxylated styrene-butadiene elastomer incorporated is up to 30 parts by dry weight per 100 parts by dry weight of total elastomers.

9. Method according to any of the preceding claims wherein the tackifying resin is selected from rosin, rosin derivatives and phenolic resins.

10. Method according to any of the preceding claims wherein the amount of tackifying resin incorporated is from 10 to 30 parts by dry weight per 100 parts by dry weight of total elastomers.